# EUROPEAN PATENT APPLICATION

(11) **EP 4 582 886 A1**
(43) Date of publication of application: **09.07.2025**
(21) Application number: 24812056.0
(22) Date of filing: 23.07.2024
(51) Int. Cl.: G05B 19/04, A61G 5/04

(54) **CONTROL METHOD FOR ELECTRIC WHEELCHAIR AND RELATED APPARATUS**

(30) Priority: 15.11.2023 CN 202311516553
(71) Applicant: Shenzhen Ampere Time Digital Energy Technology Co., Ltd., Shenzhen, Guangdong 518100 (CN)
(72) Inventor: ZHAO, Menglong, Shenzhen Guangdong 518100 (CN); YANG, Keli, Shenzhen Guangdong 518100 (CN)
(74) Representative: Ipside
(86) International application number: PCT/CN2024/107026
(87) International publication number: WO 2025/102807

(57) **Abstract**

The disclosure provides a control method for an electric wheelchair and a related apparatus. The method includes the following. A corresponding target path in front of a wheelchair is determined based on an image of a road condition in front of the wheelchair shot by a camera module, a first execution operation corresponding to the target path and a first group of components corresponding to the first execution operation are determined. A first group of energy storage batteries is determined from multiple energy storage batteries based on the first execution operation and the first group of components. The first group of energy storage batteries is controlled to supply power to at least one target component in the first group of components, and the at least one target component is controlled to operate based on the first execution operation. In this way, assistance may be provided to the wheelchair under special scenarios, and the utilization efficiency of the multiple energy storage batteries is improved.

## Description

The application claims priority to Chinese Patent Application No. 2023115165538, filed November 15, 2023, and entitled "CONTROL METHOD FOR ELECTRIC WHEELCHAIR AND RELATED APPARATUS", the entire disclosure of which is incorporated herein by reference.

### TECHNICAL FIELD

The present disclosure relates to the field of normal control technology, and in particular, to a control method for an electric wheelchair and a related apparatus.

### BACKGROUND

At present, operations of all components in an electric wheelchair are driven by a single battery. When the electric wheelchair encounters a special situation, for example, going uphill, the power consumption of the electric wheelchair that is moving increases, resulting in an increased power consumption of the electric wheelchair, which requires more power from the single battery. In this case, the single battery may run out of power easily and the service life of the single battery may be reduced, thereby affecting the normal use of the electric wheelchair.

### SUMMARY

The disclosure provides a control method for an electric wheelchair and a related apparatus. In the disclosure, an auxiliary operation of a wheelchair and an auxiliary component corresponding to the auxiliary operation under special scenarios are determined, and a corresponding energy storage battery is selected from multiple energy storage batteries to supply power to the auxiliary component, so as to perform the corresponding auxiliary operation. In this way, excessive consumption of a single battery caused by increased power consumption of the electric wheelchair that is moving under special scenarios may be avoided, thereby improving the utilization efficiency of the multiple energy storage batteries.

In a first aspect, the disclosure provides a control method for an electric wheelchair, and the method is applicable to a controller of a wheelchair control system. The wheelchair control system further includes a camera module and an energy storage device, the energy storage device includes multiple energy storage batteries, and the method includes the following. A target image is received from the camera module, where the target image is an image of a road condition in front of a wheelchair shot by the camera module. A first execution operation corresponding to a target path and a first group of components corresponding to the first execution operation are determined if a current path is determined as the target path based on the target image, where the first group of components includes at least one target component. A first group of energy storage batteries is determined based on the first execution operation and the first group of components, where the first group of energy storage batteries includes at least one energy storage battery in the multiple energy storage batteries. The first group of energy storage batteries is controlled to supply power to the at least one target component in the first group of components, and the at least one target component in the first group of components is controlled to operate based on the first execution operation.

It may be seen that, in the disclosure, assistance may be provided to the wheelchair under special scenarios, thereby improving the safety of the wheelchair during operation. Meanwhile, the first group of energy storage batteries corresponding to the first execution operation and the first group of components is determined from the multiple energy storage batteries, and the first group of energy storage batteries supplies power to the at least one target component in the first group of components. This process can ensure that the power provided by the energy storage batteries meets the requirement of the first execution operation (high-power-consumption operation required by the wheelchair under special scenarios), and avoids excessive battery consumption that may occur due to the mismatch between the battery level of a single battery and the requirement of the first execution operation. This process improves the efficiency of executing operations by the wheelchair and improves the service life of the battery.

In a possible embodiment, the first group of components corresponding to the first execution operation is determined as follows. A remaining battery level of the energy storage device is obtained, where the remaining battery level of the energy storage device includes a sum of remaining battery levels of the multiple energy storage batteries. At least one first component is determined as the first group of components corresponding to the first execution operation if the remaining battery level of the energy storage device is less than a first preset threshold. At least one second component is determined as the first group of components corresponding to the first execution operation if the remaining battery level of the energy storage device is not less than the first preset threshold, where the at least one second component includes the at least one first component and at least one third component, the first component is a necessary auxiliary component for executing the first execution operation, and the third component is a non-necessary auxiliary component for executing the first execution operation.

In the disclosure, through the above method, target components corresponding to the battery level of the energy storage battery are determined based on the battery level, which not only provides assistance to the wheelchair, but also avoids a malfunction of the wheelchair caused by high power consumption.

In a possible embodiment, based on the first execution operation and the first group of components, the first group of energy storage batteries is determined as follows. At least one group of associated components in the first group of components and non-associated components in the first group of components are determined based on the first execution operation, where the associated components include multiple first target components connected by an associated operation, and the non-associated components are target components in the first group of components other than the multiple first target components. A predicted group power consumption corresponding to each group of the at least one group of associated components is determined based on an associated operation corresponding to each group of associated components, where the predicted group power consumption corresponding to each group of associated components constitutes a first predicted power consumption corresponding to the at least one group of associated components, and a second predicted power consumption corresponding to the non-associated components is determined based on the first execution operation. A first sub-group of energy storage batteries corresponding to the first predicted power consumption is determined, and a second sub-group of energy storage batteries corresponding to the second predicted power consumption is determined, where the first sub-group of energy storage batteries and the second sub-group of energy storage batteries constitute the first group of energy storage batteries.

In the disclosure, for the associated components corresponding to the associated operation in the first group of components, a power supply that simultaneously satisfies the associated components should be provided, so as to avoid affecting the entire associated operation due to insufficient power of a single component. However, for the non-associated components, a power supply of each non-associated component may be considered separately. In this way, the efficiency of selecting the first group of energy storage batteries corresponding to the first group of components from the multiple energy storage batteries may be improved.

In a possible embodiment, based on an associated operation corresponding to each group of associated components, the predicted group power consumption corresponding to each group of the at least one group of associated components is determined as follows, and based on the first execution operation, the second predicted power consumption corresponding to the non-associated components is determined as follows. A first unit power consumption corresponding to each group of associated components and a second unit power consumption corresponding to each of the non-associated components are determined. A first duration of an associated operation corresponding to each group of associated components is determined based on the target path, and the predicted group power consumption corresponding to each group of associated components is determined based on the first unit power consumption and the first duration. An execution duration of the first execution operation is determined based on the target path, and a second duration is determined based on a number of the non-associated components, where a larger number of the non-associated components corresponds to a shorter second duration, and the second duration is shorter than the execution duration. The second predicted power consumption is determined based on the second unit power consumption corresponding to each of the non-associated components and the second duration.

In the disclosure, the predicted power consumption of the associated components is determined based on the first duration of the associated operation on the target path. The duration corresponding to the non-associated components is comprehensively determined based on the duration of the first execution operation and the number of the non-associated components, and the predicted power consumption of the non-associated components is determined. In this way, the power consumption of the associated component may be precisely predicted and the power consumption of the non-associated component may be approximately predicted, thereby ensuring, on one hand, the power supply of associated operations with greater influence, and improving the efficiency of predicting the power consumption on the other hand.

In a possible embodiment, the first sub-group of energy storage batteries corresponding to the first predicted power consumption and the second sub-group of energy storage batteries corresponding to the second predicted power consumption are determined as follows. A usage status of each of the multiple energy storage batteries is determined, where the usage status includes in-use and not-in-use. If a sum of remaining battery levels of energy storage batteries not-in-use in the multiple energy storage batteries is determined to be not less than a third predicted power consumption, a first energy storage battery corresponding to each group of the at least one group of associated components and the second sub-group energy storage batteries corresponding to the non-associated components are determined from the energy storage batteries not-in-use based on the remaining battery levels of the energy storage batteries not-in-use, the predicted group power consumption corresponding to each group of the at least one group of associated components, and the second predicted power consumption, to make a remaining battery level of the first energy storage battery not less than the predicted group power consumption, and a sum of remaining battery levels of energy storage batteries included in the second sub-group of energy storage batteries not less than the second predicted battery level, where the first sub-group of energy storage batteries include first energy storage batteries corresponding to the at least one group of associated components, and the third predicted battery level is a sum of the first predicted battery level and the second predicted battery level. If the sum of the remaining battery levels of the energy storage batteries not-in-use in the multiple energy storage batteries is determined to be less than the third predicted power consumption, a first remaining battery level of in-use energy storage batteries in the multiple energy storage batteries is determined, where the first remaining battery level is used to represent a battery level other than a battery level used to maintain power supply for devices in remaining battery levels of the in-use energy storage batteries. A first energy storage battery corresponding to each group of the at least one group of associated components and the second sub-group energy storage batteries corresponding to the non-associated components are determined from the energy storage batteries not-in-use based on the first remaining battery level of the in-use energy storage batteries, the remaining battery levels of the energy storage batteries not-in-use, the predicted group power consumption corresponding to each group of the at least one group of associated components, and the second predicted power consumption, to make the remaining battery level of the first energy storage battery not less than the predicted group power consumption, and the sum of the remaining battery levels of energy storage batteries included in the second sub-group of energy storage batteries not less than the second predicted battery level, where a group of associated components with a smaller predicted group power consumption has a higher priority of using a first energy storage battery being an in-use energy storage battery.

In the disclosure, the first sub-group of energy storage batteries corresponding to the first predicted power consumption and the second sub-group of energy storage batteries corresponding to the second predicted power consumption are preferably determined from the energy storage batteries not-in-use in the multiple energy storage batteries through the above method. In this way, the first sub-group of energy storage batteries and the second sub-group of energy storage batteries can satisfy the power demand of the at least one group of associated components and the non-associated components when executing the first execution operation, and a situation where the wheelchair is unable to be used normally due to power consumption of executing the first execution operation may be avoided. Further, it is beneficial to improving the efficiency of selecting the corresponding energy storage battery from the multiple energy storage batteries.

In a possible embodiment, the first group of energy storage batteries is controlled to supply power to the at least one target component in the first group of components as follows. A first energy storage battery in the first sub-group of energy storage batteries is controlled to supply power to a corresponding group of associated components in the at least one group of associated components. The second sub-group of energy storage batteries is controlled to supply power to the non-associated components, where each of the non-associated components is supplied by at least one energy storage battery, and the at least one energy storage battery is determined based on the number of energy storage batteries in the second sub-group of energy storage batteries and a remaining battery level of each energy storage battery, to make a remaining battery level of the at least one energy storage battery that supplies power to each of the non-associated component within a preset range.

In the disclosure, the first group of energy storage batteries is controlled to supply power to the at least one target component in the first group of components through the above method, which is beneficial to improving the efficiency of supplying power to the at least one target component by the energy storage device.

In a possible embodiment, after the first group of energy storage batteries is controlled to supply power to the at least one target component in the first group of components, the method further includes the following. If there is a second energy storage battery that is unable to supply power in the first group of energy storage batteries, whether there is a third energy storage battery in the multiple energy storage batteries is determined, where a usage status of the third energy storage battery is not-in-use, and a remaining battery level of the third energy storage battery is greater than a second preset threshold, and the second energy storage battery corresponds to a fourth component in the first group of components. The third energy storage battery is controlled to supply power to the fourth component if there is the third energy storage battery in the multiple energy storage batteries. If there is no third energy storage battery in the multiple energy storage batteries, a fourth energy storage battery is determined in the multiple energy storage batteries, and the fourth energy storage battery is controlled to supply power to the fourth component, where a powered device corresponding to the fourth energy storage battery is a non-necessary device of the wheelchair when moving forward in the target path.

In the disclosure, when the fourth component is unable to be used due to power supply issues, other batteries are selected to supply power to the fourth component through the above method. In this way, a situation where components are unable to provide assistance to the wheelchair due to power supply issues may be avoided, thereby improving the stability of power supply by the energy storage batteries.

In a second aspect, the disclosure provides a control apparatus for an electric wheelchair, and the apparatus is applicable to a controller of a wheelchair control system. The wheelchair control system further includes a camera module and an energy storage device, the energy storage device includes multiple energy storage batteries, and the apparatus includes a receiving unit, a determining unit, and a control unit. The receiving unit is configured to receive a target image from the camera module, where the target image is an image of a road condition in front of a wheelchair shot by the camera module. The determining unit is configured to determine a first execution operation corresponding to a target path and a first group of components corresponding to the first execution operation if a current path is determined as the target path based on the target image, where the first group of components includes at least one target component. The determining unit is further configured to determine a first group of energy storage batteries based on the first execution operation and the first group of components, where the first group of energy storage batteries includes at least one energy storage battery in the multiple energy storage batteries. The control unit is configured to control the first group of energy storage batteries to supply power to the at least one target component in the first group of components, and control the at least one target component in the first group of components to operate based on the first execution operation.

In a third aspect, the disclosure provides an electronic apparatus. The electronic apparatus includes a processor, a memory, a communication interface. The processor, the memory, and the communication interface are connected to one another to perform communication between one another. The memory is configured to store executable program codes, and the communication interface is configured for wireless communication. The processor is configured to invoke the executable program codes stored in the memory to execute part of or all the operations described in any one of the methods in the first aspect.

In a fourth aspect, the disclosure provides a computer-readable storage medium storing electronic data which, when executed by a processor, implements part of or all the operations described in any one of the methods in the first aspect.

In a fifth aspect, the disclosure provides a computer program product. The computer program product includes a non-transitory computer-readable storage medium storing a computer program. The computer program is operable to cause a computer to execute part of or all the operations described in any one of the methods in the first aspect. The computer program product may be a software installation package.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural diagram of a wheelchair control system provided in an embodiment of the disclosure.
FIG. 2 is a schematic flow chart of a control method for an electric wheelchair provided in an embodiment of the disclosure.
FIG. 3 is a schematic structural diagram of a target image provided in an embodiment of the disclosure.
FIG. 4 is a schematic structural diagram of an energy storage battery status display provided in an embodiment of the disclosure.
FIG. 5 is a block diagram of functional units of a control apparatus for an electric wheelchair provided in an embodiment of the disclosure.
FIG. 6 is a block diagram of functional units of a control application apparatus for an electric wheelchair provided in an embodiment of the disclosure.
FIG. 7 is a structural block diagram of an electronic apparatus provided in an embodiment of the disclosure.

### DETAILED DESCRIPTION

In order to enable those skilled in the art to better understand the solutions of the disclosure, the following will clearly and completely illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference to "embodiment" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

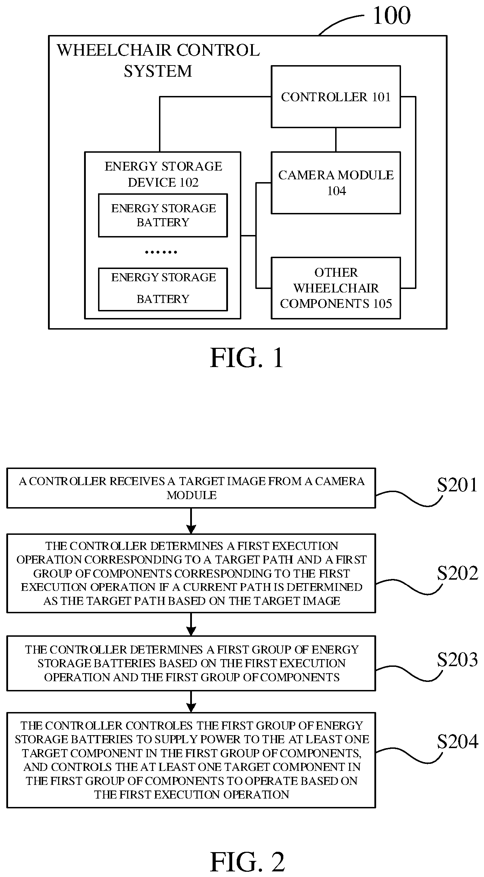

Reference is made to FIG. 1, which is a schematic structural diagram of a wheelchair control system provided in an embodiment of the disclosure. The wheelchair control system is applicable to an electric wheelchair. As illustrated in FIG. 1, a wheelchair control system 100 includes a controller 101, an energy storage device 102, a camera module 104, and other wheelchair components 105. The energy storage device 102 includes multiple energy storage batteries.

The controller 101 is configured to control the operation of other devices, and control the energy storage device 102 to supply power to other devices. The controller 101 further includes a battery management system (BMS), which is configured to monitor the battery status of each of the multiple energy storage batteries, for example, the battery level of a battery.

The energy storage device 102 is configured to supply power to other devices. The multiple energy storage batteries included in the energy storage device 102 may supply power to different devices respectively. For example, an energy storage battery A in the multiple energy storage batteries supplies power to the controller 101, an energy storage battery B in the multiple energy storage batteries supplies power to the camera module 104. Further, in order to supply power to other devices, the energy storage device 102 needs to convert current through an inverter.

The camera module 104 is configured to capture images of road conditions in front of the wheelchair, and the camera module 104 includes one or more cameras.

Other wheelchair components 105 include other components that can be electrically controlled in the wheelchair, such as a wheelchair main wheel, an auxiliary wheel, a backrest, and a pedal.

In the disclosure, the camera module 104 captures an image of road conditions in front of the wheelchair, and the controller 101 analyses the image to determine whether a current path is a target path. The controller 101 determines a first execution operation corresponding to the target path and a first group of components corresponding to the first execution operation if the current path is determined as the target path. The controller 101 determines a first group of energy storage batteries from multiple energy storage batteries based on the first execution operation and the first group of components, controls the first group of energy storage batteries to supply power to the at least one target component in the first group of components, and controls the at least one target component in the first group of components to operate based on the first execution operation. It may be seen that in the disclosure, in a case where there is a special scenario, based on an extra power-consumption component corresponding to the special scenario, a corresponding energy storage battery is determined from the multiple energy storage batteries to supply power to the extra power-consumption component. In this way, the battery level and the output power of a single battery failing to satisfy the required power consumption of the electrical wheelchair that is moving under the special scenario may be avoided, and the normal usage of the electric wheelchair will be less affected. Meanwhile, the efficiency of executing operations by the electric wheelchair is improved, thereby improving the service life of the battery.

In view of this, embodiments of the disclosure provide a control method for an electric wheelchair. The following will describe in detail embodiments of the disclosure with reference to the accompanying drawings.

Reference is made to FIG. 2, which is a schematic flow chart of a control method for an electric wheelchair provided in an embodiment of the disclosure. The method is applicable to the above wheelchair control system, and the method includes the following operations as illustrated in FIG. 2.

At S201, a controller receives a target image from a camera module.

The target image is an image of the road condition in front of a wheelchair shot by the camera module. The angle of the camera module when capturing images may be adaptively adjusted.

At S202, the controller determines a first execution operation corresponding to a target path and a first group of components corresponding to the first execution operation if a current path is determined as the target path based on the target image.

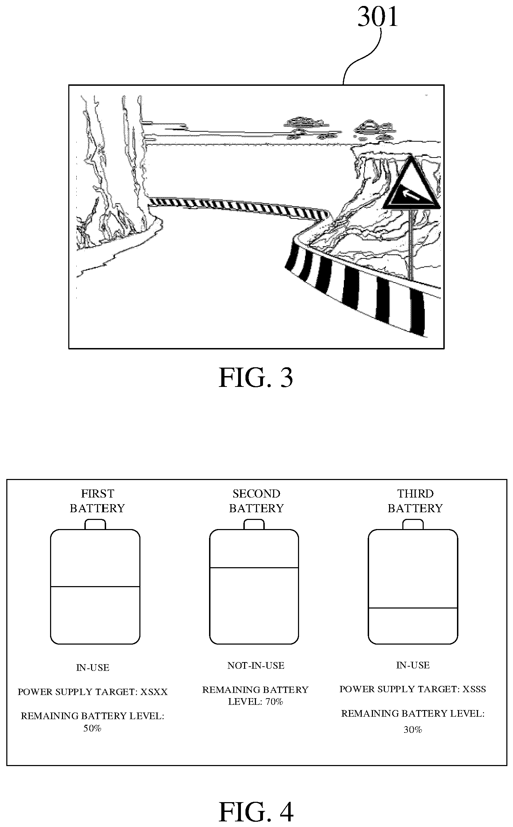

The first group of components includes at least one target component. The target path may include an uphill path, a downhill path, a bumpy path. For example, reference is made to FIG. 3, which is a schematic structural diagram of a target image provided in an embodiment of the disclosure. A target image 301 is illustrated in FIG. 3. As seen in the target image 301, the current path is the uphill path included in the target path.

Each path corresponds to a first execution operation, and the first execution operation is an operation used for assisting the wheelchair to move on the target path. For example, if the target path is an uphill path, the first execution operation refers to an operation of assisting the wheelchair to move uphill. The operation is to assist the wheelchair to move by an auxiliary wheel, and the first group of components corresponding to the first execution operation includes the auxiliary wheel, a slider, and a sliding rod. The slider and the sliding rod are components used to move the auxiliary wheel to a corresponding position, that is, the auxiliary wheel is moved to the rear side of the wheelchair through the slider and the sliding rod. The wheelchair is driven to move forward by the auxiliary wheel on the rear side, and the auxiliary wheel may prevent the wheelchair from tilting backwards during the movement. If the target path is a downhill path, the first execution operation refers to an operation used for assisting the wheelchair to move downhill. The operation is to adjust the wheelchair main body to prevent the wheelchair from tilting forward, and the first group of components corresponding to the first execution operation includes a backrest and a pedal. That is, the angle or the height of the backrest and the pedal is adjusted to lower the center of gravity of the wheelchair main body, thereby preventing the wheelchair from tilting forwards when going downhill.

A specific description of how to determine the first group of components corresponding to the first execution operation in the current step is provided in the following.

Specifically, in a possible embodiment, the first group of components corresponding to the first execution operation is determined as follows. A remaining battery level of the energy storage device is obtained, where the remaining battery level of the energy storage device includes a sum of remaining battery levels of the multiple energy storage batteries. At least one first component is determined as the first group of components corresponding to the first execution operation if the remaining battery level of the energy storage device is less than a first preset threshold. At least one second component is determined as the first group of components corresponding to the first execution operation if the remaining battery level of the energy storage device is not less than the first preset threshold, where the at least one second component includes the at least one first component and at least one third component, the first component is a necessary auxiliary component for executing the first execution operation, and the third component is a non-necessary auxiliary component for executing the first execution operation.

The first execution operation is to assist the wheelchair to move on the current path. Therefore, there may be multiple target components for the first execution operation, including necessary components and non-necessary components. For example, if the target path is a downhill path, the first execution operation is to assist the wheelchair to move on the downhill path, and the wheelchair may easily tilt forward when going downhill. Therefore, the first execution operation is mainly to prevent the wheelchair from tilting forward on the downhill path. The target components used to prevent the wheelchair from tilting forward include the backrest, the pedal, the auxiliary wheel, the slider, and the sliding rod. The backrest and the pedal are used to lower the center of gravity of the wheelchair main body, while the auxiliary wheel, the slider, and the sliding rod are used to move the auxiliary wheel to the front of the wheelchair for support. In this case, the backrest and pedal may be set as necessary components for the current first execution operation, and the auxiliary wheel, the slider, and the sliding pod are non-necessary components for the current first execution operation.

In the embodiment of the disclosure, corresponding target components for executing the first execution operation are determined by determining the current remaining battery level of the energy storage device in the wheelchair. When the remaining battery level is sufficient, all the auxiliary components in the wheelchair that can execute the first execution operation are determined as the target components. When the remaining battery level is insufficient, the necessary auxiliary components in the wheelchair for executing the first execution operation are determined as the target components. In this way, the target components corresponding to the battery level of the energy storage battery are determined based on the battery level, which not only provides assistance to the wheelchair, but also avoids a malfunction of the wheelchair caused by high power consumption.

At S203, the controller determines a first group of energy storage batteries based on the first execution operation and the first group of components.

The first group of energy storage batteries include at least one energy storage battery in the multiple energy storage batteries.

A specific description of the current operation is provided in the following.

Specifically, in a possible embodiment, based on the first execution operation and the first group of components, the first group of energy storage batteries is determined as follows. At least one group of associated components in the first group of components and non-associated components in the first group of components are determined based on the first execution operation, where the associated components include multiple first target components connected by an associated operation, and the non-associated components are target components in the first group of components other than the multiple first target components. A predicted group power consumption corresponding to each group of the at least one group of associated components is determined based on an associated operation corresponding to each group of associated components, where the predicted group power consumption corresponding to each group of associated components constitutes a first predicted power consumption corresponding to the at least one group of associated components, and a second predicted power consumption corresponding to the non-associated components is determined based on the first execution operation. A first sub-group of energy storage batteries corresponding to the first predicted power consumption is determined, and a second sub-group of energy storage batteries corresponding to the second predicted power consumption is determined, where the first sub-group of energy storage batteries and the second sub-group of energy storage batteries constitute the first group of energy storage batteries.

One group of associated components includes multiple first target components connected by an associated operation. The associated operation refers to an operation completed together by the multiple first target components, where execution purposes of execution operations corresponding to the multiple first target components are the same. For example, in a case where the first group of components includes the slider, the sliding rod, and the auxiliary wheel, and the slider and the sliding rod need to cooperate to move the auxiliary wheel to a corresponding position, the slider and the sliding rod may be determined as one group of associated components, and the auxiliary wheel is the non-associated component.

A predicted power consumption of the associated operation corresponding to the multiple target components included in one group of associated components may be determined based on the power consumption of the entire associated operation. This is because the energy storage device needs to supply power to the multiple target components in one group of associated components to ensure that the entire associated operation corresponding to the multiple target components can be executed. Therefore, determining the predicted power consumption of one group of associated components as a whole is beneficial to determining the energy storage batteries that supply power to the group of associated components. For the non-associated components, in order to facilitate statistics, the second predicted power consumption corresponding to all the non-associated components is determined based on the first execution operation.

The first sub-group of energy storage batteries supplies power to the at least one group of associated components, and the second sub-group of energy storage batteries supplies power to the non-associated components. The first sub-group of energy storage batteries is determined based on the first predicted power consumption, which ensures that the remaining battery level of the first sub-group of energy storage batteries can support the power consumption of the at least one group of associated components. The second sub-group of energy storage batteries is determined based on the second predicted power consumption, which ensures that the remaining battery level of the second sub-group of energy storage batteries can support the power consumption of the non-associated components.

In the disclosure, for the associated components corresponding to the associated operation in the first group of components, a power supply that simultaneously satisfies the associated components should be provided, so as to avoid affecting the entire associated operation due to insufficient power of a single component. However, for the non-associated components, a power supply of each non-associated component may be considered separately. In this way, the efficiency of selecting the first group of energy storage batteries corresponding to the first group of components from the multiple energy storage batteries may be improved.

A specific description of "the predicted group power consumption corresponding to each group of the at least one group of associated components is determined based on the associated operation corresponding to each group of associated components, and the second predicted power consumption corresponding to the non-associated components is determined based on the first execution operation" in the above embodiment is provided in the following.

Specifically, in a possible embodiment, based on an associated operation corresponding to each group of associated components, the predicted group power consumption corresponding to each group of the at least one group of associated components is determined as follows, and based on the first execution operation, the second predicted power consumption corresponding to the non-associated components is determined as follows. A first unit power consumption corresponding to each group of associated components and a second unit power consumption corresponding to each of the non-associated components are determined. A first duration of an associated operation corresponding to each group of associated components is determined based on the target path, and the predicted group power consumption corresponding to each group of associated components is determined based on the first unit power consumption and the first duration. An execution duration of the first execution operation is determined based on the target path, and a second duration is determined based on a number of the non-associated components, where a larger number of the non-associated components corresponds to a shorter second duration, and the second duration is shorter than the execution duration. The second predicted power consumption is determined based on the second unit power consumption corresponding to each of the non-associated components and the second duration.

For each group of associated components, the predicted group power consumption corresponding to each group of associated components may be determined based on the duration of the associated operation corresponding to each group of associated components. For the non-associated components, it is memory-consuming to separately determine the duration of execution operation corresponding to each non-associated component. Therefore, in the disclosure, the second duration corresponding to each non-associated component is determined based on the execution duration of the first execution operation and the number of the non-associated components, and the second predicted power consumption is determined based on the second duration and the second unit power consumption corresponding to each non-associated component. This is because in the non-associated components, the duration of the execution operation corresponding to each non-associated component may not be the same as the execution duration of the first execution operation. For each non-associated component, if the second predicted power consumption is determined based on the execution duration of the first execution operation, it will result in an excessive second predicted power consumption and have an impact on the subsequent determination of the corresponding energy storage battery. Moreover, a greater number of the non-associated components leads to a greater error in the second predicted power consumption, and a greater impact on the subsequent determination of the corresponding energy storage battery.

Therefore, in the disclosure, the second duration corresponding to each non-associated component is determined mainly based on the number of the non-associated components. A greater number of the non-associated components corresponds to a shorter second duration, which may prevent a large error in the second predicted power consumption caused by a large number of the non-associated components.

In the disclosure, the predicted power consumption of the associated component is determined based on the first duration of the associated operation on the target path. The duration corresponding to the non-associated components is comprehensively determined based on the duration of the first execution operation and the number of the non-associated components, and the predicted power consumption of the non-associated components is determined. In this way, the power consumption of the associated component may be precisely predicted and the power consumption of the non-associated component may be approximately predicted, thereby ensuring, on one hand, the power supply of associated operations with greater influence, and improving the efficiency of predicting the power consumption on the other hand.

A specific description of "the first sub-group of energy storage batteries corresponding to the first predicted power consumption is determined, and the second sub-group of energy storage batteries corresponding to the second predicted power consumption is determined" in the above embodiment is provided in the following.

Specifically, in a possible embodiment, the first sub-group of energy storage batteries corresponding to the first predicted power consumption and the second sub-group of energy storage batteries corresponding to the second predicted power consumption are determined as follows. A usage status of each of the multiple energy storage batteries is determined, where the usage status includes in-use and not-in-use. If a sum of remaining battery levels of energy storage batteries not-in-use in the multiple energy storage batteries is determined to be not less than a third predicted power consumption, a first energy storage battery corresponding to each group of the at least one group of associated components and the second sub-group energy storage batteries corresponding to the non-associated components are determined from the energy storage batteries not-in-use based on the remaining battery levels of the energy storage batteries not-in-use, the predicted group power consumption corresponding to each group of the at least one group of associated components, and the second predicted power consumption, to make a remaining battery level of the first energy storage battery not less than the predicted group power consumption, and a sum of remaining battery levels of energy storage batteries included in the second sub-group of energy storage batteries not less than the second predicted battery level, where the first sub-group of energy storage batteries include first energy storage batteries corresponding to the at least one group of associated components, and the third predicted battery level is a sum of the first predicted battery level and the second predicted battery level. If the sum of the remaining battery levels of the energy storage batteries not-in-use in the multiple energy storage batteries is determined to be not less than the third predicted power consumption, a first remaining battery level of in-use energy storage batteries in the multiple energy storage batteries is determined, where the first remaining battery level is used to represent a battery level other than a battery level used to maintain power supply for devices in remaining battery levels of the in-use energy storage batteries. A first energy storage battery corresponding to each group of the at least one group of associated components and the second sub-group energy storage batteries corresponding to the non-associated components are determined from the energy storage batteries not-in-use based on the first remaining battery level of the in-use energy storage batteries, the remaining battery levels of the energy storage batteries not-in-use, the predicted group power consumption corresponding to each group of the at least one group of associated components, and the second predicted power consumption, to make the remaining battery level of the first energy storage battery not less than the predicted group power consumption, and the sum of the remaining battery levels of energy storage batteries included in the second sub-group of energy storage batteries not less than the second predicted battery level, where a group of associated components with a smaller predicted group power consumption has a higher priority of using a first energy storage battery being an in-use energy storage battery.

In order to not affect the normal operation of the wheelchair, when determining the first group of energy storage batteries corresponding to the first group of components, the first group of energy storage batteries is preferably determined from the energy storage batteries currently not-in-use in the multiple energy storage batteries. Therefore, in this embodiment, the usage status of each of the multiple energy storage batteries is determined, and the sum of remaining battery levels of the energy storage batteries not-in-use in the multiple energy storage batteries is determined. If the sum of remaining battery levels of the energy storage batteries not-in-use is not less than the sum of the first predicted power consumption and the second predicted power consumption, the first group of energy storage batteries corresponding to the first predicted power consumption and the second group of energy storage batteries corresponding to the second predicted power consumption are determined from the energy storage batteries not-in-use. In this embodiment, each group of associated components and the non-associated components are taken as a whole respectively, so that the remaining battery level of the first energy storage battery corresponding to each group of associated components determined from the energy storage batteries not-in-use is not less than the predicted group power consumption of the group of associated components corresponding to the first energy storage battery. Meanwhile, the sum of remaining battery levels of the energy storage batteries included in the second sub-group of energy storage batteries corresponding to the non-associated components determined from the energy storage batteries not-in-use is not less than the second predicted power consumption.

If the sum of remaining battery levels of the energy storage batteries not-in-use in the multiple energy storage batteries is less than the third predicted power consumption, in addition to determining the first sub-group of energy storage batteries and the second sub-group of energy storage batteries from the energy storage batteries not-in-use, it is necessary to determine some energy storage batteries from the in-use energy storage batteries as the first sub-group of energy storage batteries and the second sub-group of energy storage batteries. Since the in-use energy storage batteries need to maintain the normal operation of the wheelchair, the in-use energy storage batteries only need to supply a power equal to the third predicted power consumption minus the sum of remaining battery levels of the energy storage batteries not-in-use. Furthermore, since the second predicted power consumption of the non-associated components is mainly determined based on the duration of the first execution operation and the number of the non-associated components, the second predicted power consumption cannot fully represent the power supply duration corresponding to the non-associated components. However, the predicted group power consumption for each group of associated components can reflect the power supply duration corresponding to each group of associated components. Therefore, when determining the first energy storage batteries respectively corresponding to the at least one group of associated components in the first sub-group of energy storage batteries, the power allocated from the in-use energy storage batteries is preferably allocated to the group of associated components with the smallest predicted group power consumption.

For example, there are a group A of associated components, a group B of associated components, and a non-associated component C, where the predicted group power consumption corresponding to the group A of associated components is 10, the predicted group power consumption corresponding to the group B of associated components is 20, and the second predicted power consumption corresponding to the non-associated component C is 40. If the sum of remaining battery levels of the energy storage batteries not-in-use is 60, it can be determined that the remaining battery level of 60 is less than the third predicted power consumption of 70 (10+20+40). Therefore, when determining a first energy storage battery corresponding to the group A of associated components and a first energy storage battery corresponding to the group B of associated components, and a second sub-group of energy storage batteries corresponding to the non-associated component C, it is necessary to determine some energy storage batteries from the in-use energy storage batteries as the first energy storage battery or the second sub-group of energy storage batteries. Since the group A of associated components corresponds to the smallest predicted group power consumption, one of the in-use energy storage batteries is preferably determined as the first energy storage battery corresponding to the group A of associated components. Accordingly, an energy storage battery that can supply an additional battery level of 10 is determined from the in-use energy storage batteries as the first energy storage battery corresponding to the group A of associated components. Additionally, the first energy storage battery corresponding to the group B of associated components and the second sub-group energy storage batteries corresponding to the non-associated component C are determined from the energy storage batteries not-in-use.

For example, reference is made to FIG. 4, which is a schematic structural diagram of an energy storage battery status display provided in an embodiment of the disclosure. As illustrated in FIG. 4, there are a first battery, a second battery, and a third battery, where the usage statuses of the first battery and the third battery are in-use. A power supply target of the first battery is XSXX, and a power supply target of the third battery is XSSS. The usage status of the second battery is not-in-use. The remaining battery level of the first battery is 50%, the remaining battery level of the second battery is 70%, and the remaining battery level of the third battery is 30%.

In the disclosure, the first sub-group of energy storage batteries corresponding to the first predicted power consumption and the second sub-group of energy storage batteries corresponding to the second predicted power consumption are preferably determined from the energy storage batteries not-in-use in the multiple energy storage batteries through the above method. In this way, the first sub-group of energy storage batteries and the second sub-group of energy storage batteries can satisfy the power demand of the at least one group of associated components and the non-associated components when executing the first execution operation, and a situation where the wheelchair is unable to be used normally due to power consumption of executing the first execution operation may be avoided. Further, it is beneficial to improving the efficiency of selecting the corresponding energy storage battery from the multiple energy storage batteries.

At S204, the controller controls the first group of energy storage batteries to supply power to the at least one target component in the first group of components, and controls the at least one target component in the first group of components to operate based on the first execution operation.

After determining the first group of energy storage batteries corresponding to the first group of components using the above method, the first group of energy storage batteries is controlled to supply power to the first group of components, so that the first group of components can assist the wheelchair to move on the target path, thereby improving the safety of the wheelchair when moving on the target path.

A specific description of the current operation is provided in combination of the above embodiments in the following.

In a possible embodiment, the first group of energy storage batteries is controlled to supply power to the at least one target component in the first group of components as follows. A first energy storage battery in the first sub-group of energy storage batteries is controlled to supply power to a corresponding group of associated components in the at least one group of associated components. The second sub-group of energy storage batteries is controlled to supply power to the non-associated components, where each of the non-associated components is supplied by at least one energy storage battery, and the at least one energy storage battery is determined based on the number of energy storage batteries in the second sub-group of energy storage batteries and a remaining battery level of each energy storage battery, to make a remaining battery level of the at least one energy storage battery that supplies power to each of the non-associated component within a preset range.

Each group of the at least one group of associated components is powered by the first energy storage battery corresponding to each group of associated components. In this way, the entire associated operation being unable to be completed due to insufficient power of a single component in each group of associate components may be avoided. There may be one or more first energy storage batteries. When the non-associated components are powered by the second sub-group of energy storage batteries, each non-associated component needs to be powered separately. Therefore, when allocating an energy storage battery to supply each non-associated component, it needs to ensure that the remaining battery level of the energy storage battery corresponding to each non-associated component is within a preset range. Similarly, one non-associated component may be powered by one or more energy storage batteries. The preset range may be determined based on a ratio of the remaining battery levels of the energy storage batteries in the second sub-group of energy storage batteries to the number of the non-associated components. For example, if the ratio of the remaining battery levels of the energy storage batteries in the second sub-group of energy storage batteries to the number of non-associated components is 25, the preset range may be determined to be [20-30].

In the disclosure, the first group of energy storage batteries is controlled to supply power to the at least one target component in the first group of components through the above method, which is beneficial to improving the efficiency of supplying power to the at least one target component by the energy storage device.

Further, in a possible embodiment, after the first group of energy storage batteries is controlled to supply power to the at least one target component in the first group of components, the method further includes the following. If there is a second energy storage battery that is unable to supply power in the first group of energy storage batteries, whether there is a third energy storage battery in the multiple energy storage batteries is determined, where a usage status of the third energy storage battery is not-in-use, and a remaining battery level of the third energy storage battery is greater than a second preset threshold, and the second energy storage battery corresponds to a fourth component in the first group of components. The third energy storage battery is controlled to supply power to the fourth component if there is the third energy storage battery in the multiple energy storage batteries. If there is no third energy storage battery in the multiple energy storage batteries, a fourth energy storage battery is determined in the multiple energy storage batteries, and the fourth energy storage battery is controlled to supply power to the fourth component, where a powered device corresponding to the fourth energy storage battery is a non-necessary device of the wheelchair when moving forward in the target path.

During the power supply process, when an energy storage battery in the multiple energy storage batteries that supplies power to the fourth component in the first group of components is unable to continue to supply power due to a malfunction or other issues, other energy storage batteries are needed to supply power to the fourth component. At this point, it needs to firstly determine whether there is the third energy storage battery in the multiple energy storage batteries that is not in use and has a remaining battery level greater than the second preset threshold. The second preset threshold may be determined based on storage battery capacity of the energy storage battery, for example, one percent of the storage battery capacity may be determined as the second preset threshold. If there is the third energy storage battery, the third energy storage battery may be directly controlled to supply power to the fourth component. If there is no third energy storage battery, an energy storage battery that supplies power to the fourth component needs to be determined from the in-use energy storage batteries. In this case, it may be determined that during the movement on the target path, there is a non-necessary device in the powered devices corresponding to the multiple energy storage batteries, for example, a camera module. The fourth energy storage battery that supplies power to this non-necessary device is controlled to supply power to the fourth component.

In the disclosure, when the fourth component is unable to be used due to power supply issues, other batteries are selected to supply power to the fourth component through the above method. In this way, a situation where components are unable to provide assistance to the wheelchair due to power supply issues may be avoided, thereby improving the stability of power supply by the energy storage batteries.

It may be seen that, in the embodiment of the disclosure, if a corresponding target path in front of the wheelchair is determined based on an image of a road condition in front of the wheelchair shot by the camera module, a first execution operation corresponding to the target path and a first group of components corresponding to the first execution operation are determined. A first group of energy storage batteries is determined from multiple energy storage batteries based on the first execution operation and the first group of components. The first group of energy storage batteries is controlled to supply power to at least one target component in the first group of components, and the at least one target component is controlled to operate based on the first execution operation. In this way, assistance may be provided to the wheelchair under special scenarios, thereby improving the safety of the wheelchair during operation. Meanwhile, a corresponding first group of energy storage batteries is determined from the multiple energy storage batteries to supply power to the at least one target component, which avoids excessive battery consumption of a single battery due to increased power consumption of the electric wheelchair that is moving under special scenarios. Therefore, the battery may be less affected when the assistance is provided to the wheelchair, which helps to improve the utilization efficiency of the multiple energy storage batteries and improve the service life of the battery.

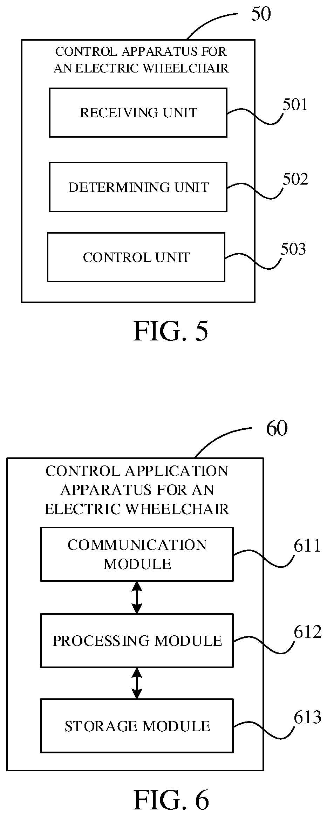

Similar to the above embodiments, reference is made to FIG. 5, which is a block diagram of functional units of a control apparatus for an electric wheelchair provided in an embodiment of the disclosure. The apparatus is applicable to the above controller. As illustrated in FIG. 5, a control apparatus 50 for an electric wheelchair includes a receiving unit 501, a determining unit 502, and a control unit 503. The receiving unit 501 is configured to receive a target image from the camera module, where the target image is an image of a road condition in front of a wheelchair shot by the camera module. The determining unit 502 is configured to determine a first execution operation corresponding to a target path and a first group of components corresponding to the first execution operation if a current path is determined as the target path based on the target image, where the first group of components includes at least one target component. The determining unit 502 is further configured to determine a first group of energy storage batteries based on the first execution operation and the first group of components, where the first group of energy storage batteries includes at least one energy storage battery in the multiple energy storage batteries. The control unit 503 is configured to control the first group of energy storage batteries to supply power to the at least one target component in the first group of components, and control the at least one target component in the first group of components to operate based on the first execution operation.

In a possible embodiment, in terms of determining the first group of components corresponding to the first execution operation, the determining unit 502 is specifically configured to: obtain a remaining battery level of the energy storage device, where the remaining battery level of the energy storage device includes a sum of remaining battery levels of the multiple energy storage batteries; determine at least one first component as the first group of components corresponding to the first execution operation if the remaining battery level of the energy storage device is less than a first preset threshold; determine at least one second component as the first group of components corresponding to the first execution operation if the remaining battery level of the energy storage device is not less than the first preset threshold, where the at least one second component includes the at least one first component and at least one third component, the first component is a necessary auxiliary component for executing the first execution operation, and the third component is a non-necessary auxiliary component for executing the first execution operation.

In a possible embodiment, in terms of determining the first group of energy storage batteries based on the first execution operation and the first group of components, the determining unit 502 is specifically configured to: determine at least one group of associated components in the first group of components and non-associated components in the first group of components based on the first execution operation, where the associated components include multiple first target components connected by an associated operation, and the non-associated components are target components in the first group of components other than the multiple first target components; determine a predicted group power consumption corresponding to each group of the at least one group of associated components based on an associated operation corresponding to each group of associated components, where the predicted group power consumption corresponding to each group of associated components constitutes a first predicted power consumption corresponding to the at least one group of associated components, and determine a second predicted power consumption corresponding to the non-associated components based on the first execution operation; determine a first sub-group of energy storage batteries corresponding to the first predicted power consumption, and determine a second sub-group of energy storage batteries corresponding to the second predicted power consumption, where the first sub-group of energy storage batteries and the second sub-group of energy storage batteries constitute the first group of energy storage batteries.

In a possible embodiment, in terms of determining the predicted group power consumption corresponding to each group of the at least one group of associated components based on the associated operation corresponding to each group of associated components, and determining the second predicted power consumption corresponding to the non-associated components based on the first execution operation, the determining unit 502 is specifically configured to: determine a first unit power consumption corresponding to each group of associated components and a second unit power consumption corresponding to each of the non-associated components; determine a first duration of an associated operation corresponding to each group of associated components based on the target path, and determine the predicted group power consumption corresponding to each group of associated components based on the first unit power consumption and the first duration; determine an execution duration of the first execution operation based on the target path, and determine a second duration based on the number of the non-associated components, where a larger number of the non-associated components corresponds to a shorter second duration, and the second duration is shorter than the execution duration; determine the second predicted power consumption based on the second unit power consumption corresponding to each of the non-associated components and the second duration.

In a possible embodiment, in terms of determining the first sub-group of energy storage batteries corresponding to the first predicted power consumption, and determining the second sub-group of energy storage batteries corresponding to the second predicted power consumption, the determining unit 502 is specifically configured to: determine a usage status of each of the multiple energy storage batteries, where the usage status includes in-use and not-in-use; if a sum of remaining battery levels of energy storage batteries not-in-use in the multiple energy storage batteries is determined to be not less than a third predicted power consumption, determine, based on the remaining battery levels of the energy storage batteries not-in-use, the predicted group power consumption corresponding to each group of the at least one group of associated components, and the second predicted power consumption, a first energy storage battery corresponding to each group of the at least one group of associated components from the energy storage batteries not-in-use, and the second sub-group energy storage batteries corresponding to the non-associated components from the energy storage batteries not-in-use, to make a remaining battery level of the first energy storage battery not less than the predicted group power consumption, and a sum of remaining battery levels of energy storage batteries included in the second sub-group of energy storage batteries not less than the second predicted battery level, where the first sub-group of energy storage batteries include first energy storage batteries corresponding to the at least one group of associated component, and the third predicted battery level is a sum of the first predicted battery level and the second predicted battery level; if the sum of the remaining battery levels of the energy storage batteries not-in-use in the multiple energy storage batteries is determined to be less than the third predicted power consumption, determine a first remaining battery level of in-use energy storage batteries in the multiple energy storage batteries, where the first remaining battery level is used to represent a battery level other than a battery level used to maintain power supply for devices in remaining battery levels of the in-use energy storage batteries; determine, based on the first remaining battery level of the in-use energy storage batteries, the remaining battery levels of the energy storage batteries not-in-use, the predicted group power consumption corresponding to each group of the at least one group of associated components, and the second predicted power consumption, a first energy storage battery corresponding to each group of the at least one group of associated components from the energy storage batteries not-in-use, and the second sub-group energy storage batteries corresponding to the non-associated components from the energy storage batteries not-in-use, to make the remaining battery level of the first energy storage battery not less than the predicted group power consumption, and the sum of the remaining battery levels of energy storage batteries included in the second sub-group of energy storage batteries not less than the second predicted battery level, where a group of associated components with a smaller predicted group power consumption has a higher priority of using a first energy storage battery being an in-use energy storage battery.

In a possible embodiment, in terms of controlling the first group of energy storage batteries to supply power to the at least one target component in the first group of components, the determining unit 502 is specifically configured to: control a first energy storage battery in the first sub-group of energy storage batteries to supply power to a corresponding group of associated components in the at least one group of associated components; control the second sub-group of energy storage batteries to supply power to the non-associated components, where each of the non-associated components is supplied by at least one energy storage battery, and the at least one energy storage battery is determined based on the number of energy storage batteries in the second sub-group of energy storage batteries and a remaining battery level of each energy storage battery, to make a remaining battery level of the at least one energy storage battery that supplies power to each of the non-associated component within a preset range.

In a possible embodiment, after the determining unit 503 is configured to control the first group of energy storage batteries to supply power to the at least one target component in the first group of components, the determining unit 502 is further configured to: determine whether there is a third energy storage battery in the multiple energy storage batteries if there is a second energy storage battery that is unable to supply power in the first group of energy storage batteries, where a usage status of the third energy storage battery is not-in-use, and a remaining battery level of the third energy storage battery is greater than a second preset threshold, and the second energy storage battery corresponds to a fourth component in the first group of components; control the third energy storage battery to supply power to the fourth component if there is the third energy storage battery in the multiple energy storage batteries; if there is no third energy storage battery in the multiple energy storage batteries, determine a fourth energy storage battery in the multiple energy storage batteries, and control the fourth energy storage battery to supply power to the fourth component, where a powered device corresponding to the fourth energy storage battery is a non-necessary device of the wheelchair when moving forward in the target path.

It may be understood that, since method embodiments and apparatus embodiments are different presentation forms of the same technical concept, the content of the method embodiments of the disclosure should be synchronized to the apparatus embodiments, which will not be repeated herein.

An integrated unit is used as illustrated in FIG. 6, which is a block diagram of functional units of a control apparatus for an electric wheelchair provided in an embodiment of the disclosure. In FIG. 6, a control application apparatus 60 for an electric wheelchair includes a processing module 612 and a communication module 611. The processing module 612 is configured to control and manage an action of the control application apparatus 60 for an electric wheelchair. For example, the processing module 612 is configured to execute operations of the receiving unit 501, the determining unit 502, and the control unit 503, and/or configured to execute other processes of the technology described in this specification. The communication module 611 is configured to support an interaction between the control application apparatus for an electric wheelchair and other devices. As illustrated in FIG. 6, the control application apparatus 60 for an electric wheelchair further includes a storage module 613, and the storage module 613 is configured to store program codes and data of the control application apparatus for an electric wheelchair.

The processing module 612 may be a processor or controller, for example, may be a central processing unit (CPU), a general-purpose processor, a digital signal processor (DSP), an application-specific integrated circuit (ASIC), a field-programmable gate array (FPGA) or another programmable logic device, a transistor logic device, a hardware component, or any combination thereof. The processing unit 612 may implement or execute various example logical blocks, modules, and circuits described with reference to content disclosed in the present disclosure. Alternatively, the processor may be a combination of processors implementing a computing function, for example, a combination of one or more microprocessors, or a combination of a DSP and a microprocessor. The communication module 611 may be a transceiver, a radio frequency (RF) circuit, a communication interface, or the like. The storage module 613 may be a memory.

All related content of each scenario in the above-mentioned method embodiments may be cited in function descriptions of a corresponding function module, which will not be elaborated herein. The above-mentioned control application apparatus 60 for an electric wheelchair can execute the control method for an electric wheelchair as illustrated in FIG. 2.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded or executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium. The semiconductor medium may be a solid state disk (SSD).

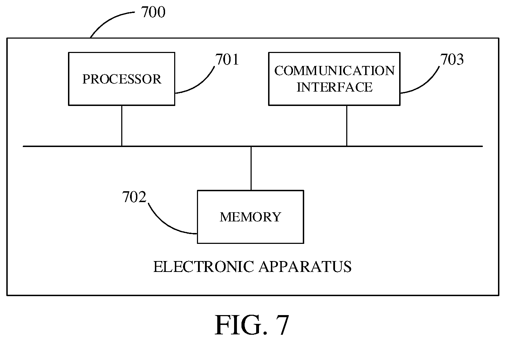

FIG. 7 is an assembly block diagram of an electronic apparatus provided in an embodiment of the disclosure. As illustrated in FIG. 7, an electronic apparatus 700 may include one or more components as follows: a processor 701, a memory 702, and a communication interface 703. The processor 701, the memory 702, and the communication interface 703 are interconnected and perform communication with each other. The memory 702 may store one or more computer programs, and the one or more computer programs may be configured to, when executed by one or more processor 701, implement the methods described in the above embodiments.

The processor 701 may include one or more processing cores. The processor 701 connects various parts within the electronic apparatus 700 through various interfaces and lines, for performing various functions of the electronic apparatus 700 and processing data by running or executing at least one instruction stored in the memory 702, and by calling data stored in the memory 702. Optionally, the processor 701 may be implemented with at least one of the following hardware forms: a DSP, an FPGA, a programmable logic array (PLA). The processor 701 may integrate one or a combination of some of a CPU, a graphics processing unit (GPU), a neural-network processing unit (NPU), and a modem. It is to be understood that the modem may be implemented by a separate chip without being integrated into the processor 701.

The memory 702 may include a random access memory (RAM) and read-only memory (ROM). The memory 702 may be configured to store an instruction, a program, a code, a code set, or an instruction set. The memory 802 may include a program storage area and a data storage area, where the program storage area may store an instruction for realizing an operating system, an instruction for realizing at least one function (such as a touch function, a sound playing function, an image playing function), an instruction for realizing the above-mentioned various method embodiments. The data storage area may also store data created by the electronic apparatus 700 in use.

It is to be understand that the structure of the electronic apparatus 700 may include more or fewer components than illustrated in the above structural diagram. For example, the electronic apparatus 700 may include a power module, a physical button, a WiFi (Wireless Fidelity) module, a speaker, a Bluetooth module, a sensor, and other components, which will not be limited herein.

The above electronic apparatus 700 may be a part of the controller of the wheelchair control system or an apparatus separated from the controller.

An embodiment of the disclosure provides a computer-readable storage medium. The computer-readable storage medium stores program data which, when executed by a processor, implements part or all of the operations of any one of the control methods for an electric wheelchair described in the above method embodiments.

An embodiment of the disclosure further provides a computer program product, where the computer program product includes a non-transitory computer-readable storage medium storing a computer program, and the computer program is operated to cause a computer to execute part or all of the operations of any one of the control methods for an electric wheelchair described in the above method embodiments. The computer program product may be a software installation package.

It is to be noted that, the method embodiments of any one of the above control methods for an electric wheelchair, for the sake of conciseness, are all described as a series of action combinations, but those skilled in the art should know that the present disclosure is not limited by the described order of action since some operations may be performed in a different order or simultaneously according to the present disclosure. Secondly, those skilled in the art should also understand that the embodiments described in the specification are all exemplary embodiments, and the actions and units involved are not necessarily required in the disclosure.

Although the disclosure is described with reference to the embodiments, in a process of implementing the disclosure that claims protection, a person skilled in the art may understand and implement another variation of the disclosed embodiments by viewing the accompanying drawings, disclosed content, and the accompanying claims. In the claims, "comprising" does not exclude another component or another step, and "a" or "one" does not exclude a case of multiple. Some measures are recorded in dependent claims that are different from each other, but this does not mean that these measures cannot be combined to produce a better effect.

Those of ordinary skill in the art may understand that all or a part of the operations of the methods in the method embodiments of any one of the control methods for an electric wheelchair may be implemented by a program instructing related hardware. The program may be stored in a computer-readable storage. The storage may include: a flash disk, a ROM, a RAM, a magnetic disk, or an optical disk.

Embodiments of the disclosure are described above in detail. Specific embodiments are used in this specification to describe the principle and implementation manners of the control method for an electric wheelchair and related apparatus. The foregoing embodiments are merely intended to help understand the method and core idea of the present invention. In addition, with respect to the implementation manners and the application scope, modifications may be made by a person of ordinary skill in the art according to the idea of the control method for an electric wheelchair and related apparatus. Therefore, the specification shall not be construed as a limitation on the present disclosure.

The present disclosure is described with reference to the flowcharts and/or block diagrams of the method, the hardware products, and the computer program product according to the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It may be understood that, any product that is controlled or configured for executing the processing method of the flow chart described in the method embodiment of the control method for an electric wheelchair, such as the terminal and computer program product of the above flow chart, belongs to the category of related products described in the present disclosure.

Obviously, those skilled in the art can make various modifications and variations to the control method for an electric wheelchair and related apparatus provided in the disclosure without departing from the spirit and scope of the disclosure. The disclosure is intended to cover these modifications and variations of the disclosure provided that they fall within the scope of protection defined by the following claims and their equivalent technologies.

## Claims

1. A control method for an electric wheelchair, wherein the method is applicable to a controller of a wheelchair control system, the wheelchair control system further comprises a camera module and an energy storage device, the energy storage device comprises a plurality of energy storage batteries, and the method comprises:
receiving a target image from the camera module, wherein the target image is an image of a road condition in front of a wheelchair shot by the camera module;
determining a first execution operation corresponding to a target path and a first group of components corresponding to the first execution operation in response to a current path being determined as the target path based on the target image, wherein the first group of components comprises at least one target component;
determining a first group of energy storage batteries based on the first execution operation and the first group of components, wherein the first group of energy storage batteries comprises at least one energy storage battery in the plurality of energy storage batteries; and
controlling the first group of energy storage batteries to supply power to the at least one target component in the first group of components, and controlling the at least one target component in the first group of components to operate based on the first execution operation.

2. The method of claim 1, wherein determining the first group of energy storage batteries based on the first execution operation and the first group of components comprises:
determining at least one group of associated components in the first group of components and non-associated components in the first group of components based on the first execution operation, wherein the associated components comprise a plurality of first target components connected by an associated operation, and the non-associated components are target components in the first group of components other than the plurality of first target components;
determining a predicted group power consumption corresponding to each group of the at least one group of associated components based on an associated operation corresponding to each group of associated components, wherein the predicted group power consumption corresponding to each group of associated components constitutes a first predicted power consumption corresponding to the at least one group of associated components, and determining a second predicted power consumption corresponding to the non-associated components based on the first execution operation; and
determining a first sub-group of energy storage batteries corresponding to the first predicted power consumption, and determining a second sub-group of energy storage batteries corresponding to the second predicted power consumption, wherein the first sub-group of energy storage batteries and the second sub-group of energy storage batteries constitute the first group of energy storage batteries.

3. The method of claim 2, wherein determining the predicted group power consumption corresponding to each group of the at least one group of associated components based on the associated operation corresponding to each group of associated components, and determining the second predicted power consumption corresponding to the non-associated components based on the first execution operation, comprises:
determining a first unit power consumption corresponding to each group of associated components and a second unit power consumption corresponding to each of the non-associated components;
determining a first duration of an associated operation corresponding to each group of associated components based on the target path, and determining the predicted group power consumption corresponding to each group of associated components based on the first unit power consumption and the first duration;
determining an execution duration of the first execution operation based on the target path, and determining a second duration based on a number of the non-associated components, wherein a larger number of the non-associated components corresponds to a shorter second duration, and the second duration is shorter than the execution duration; and
determining the second predicted power consumption based on the second unit power consumption corresponding to each of the non-associated components and the second duration.

4. The method of claim 2 or 3, wherein determining the first sub-group of energy storage batteries corresponding to the first predicted power consumption, and determining the second sub-group of energy storage batteries corresponding to the second predicted power consumption comprises:
determining a usage status of each of the plurality of energy storage batteries, wherein the usage status comprises in-use and not-in-use;
in response to determining that a sum of remaining battery levels of energy storage batteries not-in-use in the plurality of energy storage batteries is not less than a third predicted power consumption, determining, based on the remaining battery levels of the energy storage batteries not-in-use, the predicted group power consumption corresponding to each group of the at least one group of associated components, and the second predicted power consumption, a first energy storage battery corresponding to each group of the at least one group of associated components from the energy storage batteries not-in-use, and the second sub-group energy storage batteries corresponding to the non-associated components from the energy storage batteries not-in-use, to make a remaining battery level of the first energy storage battery not less than the predicted group power consumption, and a sum of remaining battery levels of energy storage batteries comprised in the second sub-group of energy storage batteries not less than the second predicted battery level, wherein the first sub-group of energy storage batteries comprise first energy storage batteries corresponding to the at least one group of associated components, and the third predicted battery level is a sum of the first predicted battery level and the second predicted battery level;
in response to determining that the sum of the remaining battery levels of the energy storage batteries not-in-use in the plurality of energy storage batteries is less than the third predicted power consumption, determining a first remaining battery level of in-use energy storage batteries in the plurality of energy storage batteries, wherein the first remaining battery level is used to represent a battery level other than a battery level used to maintain power supply for devices in remaining battery levels of the in-use energy storage batteries; and
determining, based on the first remaining battery level of the in-use energy storage batteries, the remaining battery levels of the energy storage batteries not-in-use, the predicted group power consumption corresponding to each group of the at least one group of associated components, and the second predicted power consumption, a first energy storage battery corresponding to each group of the at least one group of associated components from the energy storage batteries not-in-use, and the second sub-group energy storage batteries corresponding to the non-associated components from the energy storage batteries not-in-use, to make the remaining battery level of the first energy storage battery not less than the predicted group power consumption, and the sum of the remaining battery levels of energy storage batteries comprised in the second sub-group of energy storage batteries not less than the second predicted battery level, wherein a group of associated components with a smaller predicted group power consumption has a higher priority of using a first energy storage battery being an in-use energy storage battery.

5. The method of claim 4, wherein controlling the first group of energy storage batteries to supply power to the at least one target component in the first group of components comprises:
controlling a first energy storage battery in the first sub-group of energy storage batteries to supply power to a corresponding group of associated components in the at least one group of associated components; and
controlling the second sub-group of energy storage batteries to supply power to the non-associated components, wherein each of the non-associated components is supplied by at least one energy storage battery, and the at least one energy storage battery is determined based on a number of energy storage batteries in the second sub-group of energy storage batteries and a remaining battery level of each energy storage battery, to make a remaining battery level of the at least one energy storage battery that supplies power to each of the non-associated component within a preset range.

6. The method of any one of claims 1 to 3, wherein determining the first group of components corresponding to the first execution operation comprises:
obtaining a remaining battery level of the energy storage device, wherein the remaining battery level of the energy storage device comprises a sum of remaining battery levels of the plurality of energy storage batteries;
determining at least one first component as the first group of components corresponding to the first execution operation in response to the remaining battery level of the energy storage device being less than a first preset threshold; and
determining at least one second component as the first group of components corresponding to the first execution operation in response to the remaining battery level of the energy storage device not being less than the first preset threshold, wherein the at least one second component comprises the at least one first component and at least one third component, the first component is a necessary auxiliary component for executing the first execution operation, and the third component is a non-necessary auxiliary component for executing the first execution operation.

7. The method of claim 1, further comprising:
determining existence of a third energy storage battery in the plurality of energy storage batteries in response to presence of a second energy storage battery that is unable to supply power in the first group of energy storage batteries, wherein a usage status of the third energy storage battery is not-in-use, and a remaining battery level of the third energy storage battery is greater than a second preset threshold, and the second energy storage battery corresponds to a fourth component in the first group of components;
controlling the third energy storage battery to supply power to the fourth component in response to presence of the third energy storage battery in the plurality of energy storage batteries; and
in response to absence of the third energy storage battery in the plurality of energy storage batteries, determining a fourth energy storage battery in the plurality of energy storage batteries, and controlling the fourth energy storage battery to supply power to the fourth component, wherein a powered device corresponding to the fourth energy storage battery is a non-necessary device of the wheelchair when moving forward in the target path.

8. A control apparatus for an electric wheelchair, wherein the apparatus is applicable to a controller of a wheelchair control system, the wheelchair control system further comprises a camera module and an energy storage device, the energy storage device comprises a plurality of energy storage batteries, and wherein the apparatus comprises:
a receiving unit configured to receive a target image from the camera module, wherein the target image is an image of a road condition in front of a wheelchair shot by the camera module;
a determining unit configured to determine a first execution operation corresponding to a target path and a first group of components corresponding to the first execution operation in response to a current path being determined as the target path based on the target image, wherein the first group of components comprises at least one target component;
the determining unit being further configured to determine a first group of energy storage batteries based on the first execution operation and the first group of components, wherein the first group of energy storage batteries comprises at least one energy storage battery in the plurality of energy storage batteries; and
a control unit configured to control the first group of energy storage batteries to supply power to the at least one target component in the first group of components, and control the at least one target component in the first group of components to operate based on the first execution operation.

9. An electronic apparatus, comprising a processor, a memory, a communication interface, wherein the processor, the memory, and the communication interface are connected to one another to perform communication between one another;
the memory is configured to store executable program codes, and the communication interface is configured for wireless communication; and
the processor is configured to invoke the executable program codes stored in the memory to execute the method of any one of claims 1 to 7.

10. A computer-readable storage medium, storing a computer program used for electronic data interchange (EDI), wherein the computer program, when executed, causes a computer to execute the method of any one of claims 1 to 7.
